# EUROPÄISCHE PATENTANMELDUNG

(11) **EP 4 764 745 A1**
(43) Veröffentlichungstag der Anmeldung: **24.06.2026**
(21) Anmeldenummer: 25219160.6
(22) Anmeldetag: 27.11.2025
(51) Int. Cl.: G05B 19/042

(54) **VORRICHTUNG ZUM BEREITSTELLEN VON STEUERBEFEHLEN, KRAFTFAHRZEUG, VERFAHREN ZUM ANSTEUERN UND FAHRDYNAMIKPRÜFUNG**

(30) Priorität: 20.12.2024 DE 102024139522
(71) Anmelder: AUDI Aktiengesellschaft, 85057 Ingolstadt (DE)
(72) Erfinder: Franke, Christoph, 85057 Ingolstadt (DE); Konradt, Kevin, 85057 Ingolstadt (DE)
(74) Vertreter: Hofstetter, Schurack & Partner

(57) **Zusammenfassung**

Insbesondere im Zusammenhang mit Prototypentestung von neuen Steuergeräten ist in einem Kraftfahrzeug (vorzugsweise Kraftfahrzeugprototypen) neben dem aktuellen Steuergerät (30-1) gemäß einer früheren Variante das Steuergerät (30-2) gemäß neuerer Steuergerätevariante vorhanden, wobei durch eine Vorrichtung (10) eine Entscheidung erfolgt, ob die Steuerbefehle von dem ersten Steuergerät (30-1) oder von dem zweiten Steuergerät (30-2) im Betrieb an die zu steuernden Einrichtungen (Aktoren 50) des Kraftfahrzeugs (1) weitergeleitet werden.

## Beschreibung

Die Erfindung betrifft eine Vorrichtung zum Bereitstellen von Steuerbefehlen für zumindest eine zu steuernde Einrichtung eines Kraftfahrzeugs, wobei es sich bei der zumindest einen zu steuernden Einrichtung insbesondere um zumindest einen Aktoren/ zumindest eine Aktorengruppe des Kraftfahrzeugs handeln soll. Als zu steuernde Einrichtung können alternativ auch Sensoren angesteuert werden, etwa um sie einzuschalten oder zu aktivieren. Die Erfindung betrifft auch ein Kraftfahrzeug mit dieser Vorrichtung sowie ein entsprechendes Verfahren zum Ansteuern von zumindest einer Einrichtung eines Kraftfahrzeugs. Schließlich betrifft die Erfindung auch ein Verfahren zum Durchführen eines fahrdynamischen Tests.

Das Testing neuer Software wird normalerweise in einem FahrzeugPrototypen ermöglicht, wobei hierfür die neue Software auf das vorhandene Steuergerät geschrieben wird. Will man neue Hardware testen, muss das Steuergerät in der Werkstatt durch die neue Hardwareversion (gegebenenfalls auch dann mit neuer Software) ausgetauscht werden.

Allgemein ist das Testing neuer Software und Hardware in der Fahrzeugentwicklung im Prototypenfahrzeug sehr aufwändig. Zum einen könnten neu oder anders umgesetzte Funktionalitäten des Steuergeräts ein unvorhersehbares und ungewolltes Verhalten des Steuergeräts herbeiführen, was letztlich auch zu einer Gefahrensituation für den Tester führen kann. Durch den notwendigen Umbau von Hardware ist sehr viel Werkstattaufwand notwendig.

Allgemein offenbart die DE 10 2020 216 481 A1 ein Verfahren zum Betreiben eines Steuergeräts und ein entsprechendes Steuergerät, wobei mehrere Steuergeräte eines Kraftfahrzeugs mit mehreren Versionen einer Steuersoftware ausgestattet sind. Bei Erfassen eines Fehlers kann auf eine frühere Softwareversion gewechselt werden.

Es ist die Aufgabe der Erfindung, die Einführung neuer Steuergerätevarianten zu erleichtern.

Die Aufgabe wird durch die Gegenstände der unabhängigen Patentansprüche gelöst. Vorteilhafte Weiterentwicklungen der Erfindung sind durch die abhängigen Patentansprüche, die folgende Beschreibung und die Figur(en) beschrieben. Die Aufgabe wird also durch die Vorrichtung mit den Merkmalen nach Anspruch 1, das Kraftfahrzeug mit den Merkmalen nach Anspruch 8, das Verfahren mit den Merkmalen nach Anspruch 11 sowie das Verfahren mit den Merkmalen nach Anspruch 16 gelöst.

Die erfindungsgemäße Vorrichtung zum Bereitstellen von Steuerbefehlen für zumindest eine zu steuernde Einrichtung eines Kraftfahrzeugs (insbesondere für zumindest einen Aktoren des Kraftfahrzeugs) umfasst somit:
- Einen ersten Dateneingang für erste Steuerbefehle vorbestimmter Art von einem ersten Steuergerät gemäß einer früheren Steuergerätevariante;
- einen zweiten Dateneingang für zweite Steuerbefehle der vorbestimmten Art von einem zweiten Steuergerät gemäß einer neueren Steuergerätevariante;
- einen Datenausgang zur Ausgabe der Steuerbefehle für die zumindest eine zu steuernde Einrichtung;
- eine Datenverarbeitungseinrichtung, die ausgelegt ist, anhand einer Analyse zumindest der zweiten Steuerbefehle (also der über den zweiten Dateneingang hereinkommenden Daten) festzulegen, ob die ersten oder die zweiten Steuerbefehle an die zumindest eine zu steuernde Einrichtung weitergeleitet werden, und eine entsprechende Ausgabe über den Datenausgang zu bewirken.

### Die Erfindung hat zwei Aspekte:

Zum einen kann in einem Kraftfahrzeug neben der früheren Steuergerätevariante die neuere Steuergerätevariante zugleich vorgesehen werden. Durch die erfindungsgemäße Vorrichtung ist es hier dann möglich, im Kraftfahrzeug zu entscheiden, welche der Steuergerätevarianten in einer bestimmten Situation genutzt wird. Durch die Möglichkeit, zwischen zwei Steuergerätevarianten aktiv umzuschalten, wird es ermöglicht, diese beiden Versionen im Fahrzeug direkt miteinander zu vergleichen.

Gemäß einer bevorzugten Ausführungsform der Erfindung ist eine Schalteinrichtung explizit vorgesehen, die zum Empfangen der ersten und der zweiten Steuerbefehle ausgelegt ist und zum wahlweisen Weiterleiten der ersten oder zweiten Steuerbefehle an den Datenausgang dient. Hierbei ist die Schalteinrichtung vorzugsweise Teil der Datenverarbeitungseinrichtung (dort gegebenenfalls als Softwaremodul bereitgestellt/ ausgelegt), so dass in diesem Fall dann die Datenverarbeitungseinrichtung auch den ersten Steuerbefehl empfängt; den zweiten wird sie empfangen, um die Analyse vorzunehmen. Alternativ ist die Schalteinrichtung von der Datenverarbeitungseinrichtung ansteuerbar. Dann kann die Schalteinrichtung auch mechanisch ausgeführt werden (als Relais), oder auch als kleines gesondertes Elektronikbauteil.

Durch die genannte Schalteinrichtung kann insbesondere auch eine schnelle Umschaltung erfolgen, beispielsweise während der Fahrt des Kraftfahrzeugs.

Gemäß einer weiteren bevorzugten Ausführungsform der Vorrichtung weist diese einen dritten Dateneingang auf, über den Eingangssignale zuführbar sind, die auch dem ersten und zweiten Steuergerät zuführbar sind und so in die über den ersten und den zweiten Dateneingang eingehenden ersten und zweiten Steuerbefehle eingegangen sind oder sein könnten, und die Datenverarbeitungseinrichtung ist ausgelegt, bei der Analyse auch diese über den dritten Dateneingang zugeführten Eingangssignale zu berücksichtigen.

In diesem Fall kann die Datenverarbeitungseinrichtung eine gewisse Plausibilisierung vornehmen und situativ besser einschätzen, ob die zweiten Steuerbefehle hilfreich sind (Bremsen bei Ausscheren des Kraftfahrzeugs durch Bremsensteuergerät).

Alternativ oder zusätzlich ist es des Weiteren möglich, dass die Datenverarbeitungseinrichtung ausgelegt ist, bei der Analyse auch die ersten Steuerbefehle zu berücksichtigen (wofür diese dann der Datenverarbeitungseinrichtung zugeführt werden sollten). Hier ist ein unmittelbarer Vergleich zwischen den ersten und zweiten Steuerbefehlen möglich, so dass die Datenverarbeitungseinrichtung unmittelbar erfassen kann, worin die Unterschiede zwischen der neueren und der früheren Steuergerätevariante liegen, und wobei sie prüfen kann, ob diese auch zweckmäßig sind (d.h. ob die neuere Steuergerätevariante in einigen Situationen das gleiche tut und/oder in anderen Situationen sogar besser ist).

Gemäß einer weiteren bevorzugten Ausführungsform der Vorrichtung unterstützt selbige mehrere Funktionalitäten für die zumindest eine zu steuernde Einrichtung (darunter gegebenenfalls mehrere Untergruppen aus zu steuernden Einrichtungen, die in der Zusammensetzung variieren können). Die Datenverarbeitungseinrichtung ist ausgelegt, paarweise erste und zweite Steuerbefehle einer der Funktionalitäten zuzuordnen. Die Analyse und die entsprechende Entscheidung darüber, welche aus den ersten und den zweiten Steuerbefehlen weitergeleitet werden, erfolgen von der zuordneten Funktionalität abhängig. Mit anderen Worten kann durch die gleiche Vorrichtung eine Mehrzahl von Funktionalitäten unterstützt werden. So kann es sein, dass etwa Funktionsblöcke A und B von der alten Steuergerätevariante übernommen werden (weil diese beispielsweise dort schon immer stabil laufen), und Funktionsblock C wird von der neuen Variante übernommen. So würde für die Einrichtung des Fahrzeugs ein neues Verhalten des Steuergeräts simuliert werden, ohne dass erst eine neue Steuergerätesoftware mit den gewünschten Eigenschaften beim Lieferanten angefordert werden müsste. Dies lässt sich so formulieren, dass die Vorrichtung ausgelegt ist, erste Steuerbefehle betreffend zumindest eine erste Funktionalität mittels der Ausgabe weiterzuleiten und zweite Steuerbefehle betreffend zumindest eine von der zumindest einen ersten Funktionalität mittels der Ausgabe weiterzuleiten, wobei vorzugsweise in der Vorrichtung historische Daten abgelegt sind und/oder anhand einer Kennung in den ersten Steuerbefehlen durch die Vorrichtung erkannt wird, dass die ersten Steuerbefehle hinsichtlich der zumindest einen ersten Funktionalität schon bisher zuverlässig sind.

Gemäß einer weiteren bevorzugten Ausführungsform der Vorrichtung umfasst diese einen Speicher zum Ablegen zumindest eines Teils der empfangenen Daten und vorzugsweise zum Ablegen von zugehörigen Daten betreffend die Festlegung, welche aus den ersten und den zweiten Steuerbefehlen weitergeleitet werden/ wurden. Der Speicher kann insbesondere extern auslesbar sein (um nach der Probefahrt eines Fahrzeugprototypen in der Werkstatt die abgelegten Daten zur Verfügung stellen zu können). Alternativ oder zusätzlich kann vorgesehen sein, dass die Vorrichtung selbst den Speicher ausliest und die Daten aktiv absendet, dies gegebenenfalls auch sogar drahtlos beim Betrieb des Kraftfahrzeugs.

Gemäß einer weiteren bevorzugten Ausführungsform der Vorrichtung umfasst die Datenverarbeitungseinrichtung ein lernendes System, das ausgelegt ist, anhand der über den Datenausgang ausgegebenen Steuerbefehle und von daraufhin über die Dateneingänge eintreffenden Daten die bisherige Art der Analyse zu ändern (zu variieren).

Die Datenverarbeitungseinrichtung kann so erlernen, wann ihre Entscheidungen korrekt waren und wann nicht. So kann insbesondere gelernt werden, wann die eine Steuergerätevariante besser reagiert hat und wann die neuere andere Steuergerätevariante besser reagiert hat.

Das erfindungsgemäße Kraftfahrzeug umfasst die erfindungsgemäße Vorrichtung und zumindest eine zu steuernde Einrichtung, deren Eingang mit dem Datenausgang der Vorrichtung gekoppelt ist. Sie fasst ferner ein erstes Steuergerät gemäß einer früheren Steuergerätevariante, dessen Ausgang mit dem ersten Dateneingang der Vorrichtung gekoppelt ist, und sie umfasst ein zweites Steuergerät gemäß einer neueren Steuergerätevariante, dessen Ausgang mit dem zweiten Dateneingang der Vorrichtung gekoppelt ist.

Das Kraftfahrzeug ist die bevorzugte Anwendung der Vorrichtung. Die Vorteile der genannten Vorrichtung gelten naturgemäß auch für das Kraftfahrzeug.

Vorzugsweise umfasst das Kraftfahrzeug die Vorrichtung mit dem dritten Dateneingang wie oben genannt und zusätzlich Messeinrichtungen ("Sensoren"), deren Ausgänge mit Eingängen des ersten und des zweiten Steuergeräts und mit dem dritten Dateneingang der Vorrichtung gekoppelt sind. Auf diese Weise ist die Vorrichtung in die Lage versetzt, zuverlässig zu überprüfen, wie die beiden Steuergerätevarianten auf Dateneingänge reagieren.

Dadurch, dass gemäß der Erfindung kein Steuergerät mehr ausgetauscht werden muss, sondern einfach ein zweites Steuergerät zusätzlich vorhanden ist, zusammen mit der erfindungsgemäßen Vorrichtung, kann im Prototypen dies sehr schnell nachgerüstet werden. So ist es nicht mehr notwendig, die neuere Steuergerätevariante an dem gleichen Ort zu installieren wie ein schon vorhandenes Steuergerät. Gemäß einer Ausführungsform ist die Vorrichtung zusammen mit dem zweiten Steuergerät (oder eines von beiden) in einem Kofferraum des Kraftfahrzeugs angeordnet, oder an einem sonstigen leicht zugänglichen Ort im Kraftfahrzeug (Rückbank, Mittelkonsole oder dergleichen).

Das erfindungsgemäße Verfahren zum Ansteuern von zumindest einer Einrichtung eines Kraftfahrzeugs, insbesondere eines Aktoren des Kraftfahrzeugs, umfasst:
- Zuführen von Eingangsdaten zu einem ersten Steuergerät gemäß einer früheren Steuergerätevariante, das erste Steuerbefehle abgibt, und zu einem zweiten Steuergerät gemäß einer neueren Steuergerätevariante, das zweite Steuerbefehle abgibt;
- Empfangen zumindest der zweiten Steuerbefehle und unter Nutzung der zweiten Steuerbefehle Festlegen, ob die ersten und die zweiten Steuerbefehle an die Einrichtung übermittelt werden, und entsprechendes Ausgeben der Steuerbefehle an die Einrichtung.

Das erfindungsgemäße Verfahren ist das Verfahren, wie es in dem erfindungsgemäßen Kraftfahrzeug umsetzbar ist. Die zur Vorrichtung und damit auch zum Kraftfahrzeug genannten Vorteile gelten entsprechend für das erfindungsgemäße Verfahren.

Gemäß einer bevorzugten Ausführungsform des erfindungsgemäßen Verfahrens erfolgt das Festlegen zugleich unter Nutzung der Eingangsdaten und/oder der ersten Steuerbefehle.

Gemäß einer weiteren bevorzugten Ausführungsform des Verfahrens erfolgt das Festlegen in zeitlicher Taktung und/oder ereignisgesteuert immer wieder neu. Hier kann zuverlässig das Steuergerät in der neueren Steuergerätevariante überwacht werden, und Gefahrensituationen können effektiv vermieden werden.

Das Verfahren funktioniert optimal (genauso wie auch die Vorrichtung bzw. das Kraftfahrzeug), wenn das erste und das zweite Steuergerät ausgelegt sind, die gleiche Steuergeräteaufgabe zu erfüllen, wobei sich das erste und das zweite Steuergerät durch Hardware und/oder auf der Hardware laufende Software voneinander unterscheiden. Vorzugsweise ist zumindest die Hardware unterschiedlich, dann ist der Einbau des neueren Steuergeräts als eines weiteren Steuergeräts zusammen mit der Vorrichtung besonders sinnvoll.

Gemäß einer bevorzugten Ausführungsform des Verfahrens wird im Rahmen des Festlegens eine Analyse durchgeführt, die auch erfasst, ob die zweiten Steuerbefehle geeignet wären, eine Gefahrensituation und/oder eine wirtschaftlich unerwünschte Situation (hoher Kraftstoffverbrauch, Teileverschleiß) herbeizuführen, wobei in einem solchen Fall eine Warnung ausgegeben wird. Alternativ oder zusätzlich kann ein sicherer Zustand des Kraftfahrzeugs hervorgerufen werden (erzwungenes Halten oder wenigstens Bremsen des Kraftfahrzeugs, insbesondere durch teilautonome oder vollautonome Führung des Kraftfahrzeugs).

Die Warnung kann als Warnsignal (optisch, akustisch, haptisch) dem Fahrer (insbesondere einem Testfahrer) gegeben werden, es kann auch eine entsprechende Information drahtlos an eine externe Einheit übermittelt werden. Alternativ oder zusätzlich kann in einem Speicher der Vorrichtung (oder extern von dieser) festgehalten werden, dass die Gefahrensituation bzw. wirtschaftlich unerwünschte Situation erfasst wurde.

Zum Verfahren ist vorzugsweise - wie oben zur Vorrichtung angegeben - vorgesehen, dass die Einrichtung mehrere Funktionalitäten unterstützt, wobei die Datenverarbeitungseinrichtung ausgelegt ist, paarweise erste und zweite Steuerbefehle einer der Funktionalitäten zuzuordnen, und wobei beim Verfahren das Festlegen, welche aus den ersten und den zweiten Steuerbefehlen weitergeleitet werden, von der zugeordneten Funktionalität abhängig erfolgt.

Das erfindungsgemäße Verfahren zum Durchführung einer Fahrt eines fahrdynamischen Tests in einem Kraftfahrzeug umfasst das Bereitstellen des Kraftfahrzeugs wie oben beschrieben zusammen mit der Vorrichtung, die zugleich die oben genannte Schalteinrichtung umfasst. Nun wird (vorzugsweise unter Umgehung der Festlegung durch die Datenverarbeitungseinrichtung) die Schalteinrichtung genutzt, um die ersten Steuerbefehle des ersten Steuergeräts für eine erste Testaktion an die zu steuernde Einrichtung weiterzuleiten und die zweiten Steuerbefehle des zweiten Steuergeräts für eine zweite Testaktion an die zu steuernde Einrichtung weiterzuleiten. Die erste und die zweite Testaktion beinhalten, dass das Kraftfahrzeug auf gleicher oder vergleichbarer Teststrecke mit einer vergleichbaren Fahrweise gefahren wird. Auf diese Weise kann die erfindungsgemäße Vorrichtung gemäß der bevorzugten Ausführungsform mit Schalteinrichtung zum unmittelbaren Vergleich der beiden Steuergerätevarianten herangezogen werden.

Vorzugsweise ist in diesem Zusammenhang vorgesehen, dass im Rahmen des fahrdynamischen Tests naturgemäß auch eine Speicherung der Daten erfolgt, dies unter Nutzung des Speichers der Vorrichtung, wie gemäß bevorzugter Ausführungsform vorhanden, oder eines externen Speichers außerhalb von der Vorrichtung.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Zu der Erfindung gehört auch die Steuervorrichtung für das Kraftfahrzeug. Die Steuervorrichtung kann eine Datenverarbeitungsvorrichtung oder eine Prozessoreinrichtung (Prozessorschaltung) aufweisen, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Als Mikroprozessor kann insbesondere jeweils eine CPU (Central Processing Unit), eine GPU (Graphical Processing Unit) oder eine NPU (Neural Processing Unit) verwendet werden. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein. Die Prozessoreinrichtung kann z.B. auf zumindest einer Schaltungsplatine und/oder auf zumindest einem SoC (System on Chip) basieren.

Zu der Erfindung gehören auch Weiterbildungen des erfindungsgemäßen Verfahrens, die Merkmale aufweisen, wie sie bereits im Zusammenhang mit den Weiterbildungen der Vorrichtung oder des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Als eine weitere Lösung umfasst die Erfindung auch ein computerlesbares Speichermedium, umfassend Programmcode, der bei der Ausführung durch einen Computer oder einen Computerverbund diesen veranlasst, eine Ausführungsform des erfindungsgemäßen Verfahrens auszuführen. Das Speichermedium kann zumindest teilweise als ein nicht-flüchtiger Datenspeicher (z.B. als eine Flash-Speicher und/oder als SSD - solid state drive) und/oder zumindest teilweise als ein flüchtiger Datenspeicher (z.B. als ein RAM - random access memory) bereitgestellt sein. Das Speichermedium kann in dem Computer oder Computerverbund angeordnet sein. Das Speichermedium kann aber auch beispielsweise als sogenannter Appstore-Server und/oder Cloud-Server im Internet betrieben sein. Durch den Computer oder Computerverbund kann eine Prozessorschaltung mit beispielsweise zumindest einem Mikroprozessor bereitgestellt sein. Der Programmcode kann als Binärcode und/oder als Assembler-Code und/oder als Quellcode einer Programmiersprache (z.B. C) und/oder als Programmskript (z.B. Python) bereitgestellt sein. Das computerlesbare Speichermedium kann alternativ durch ein Signal mit computerlesbaren Daten realisiert sein, z.B. ein zeitvariantes Spannungssignal und/oder ein Funksignal.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:

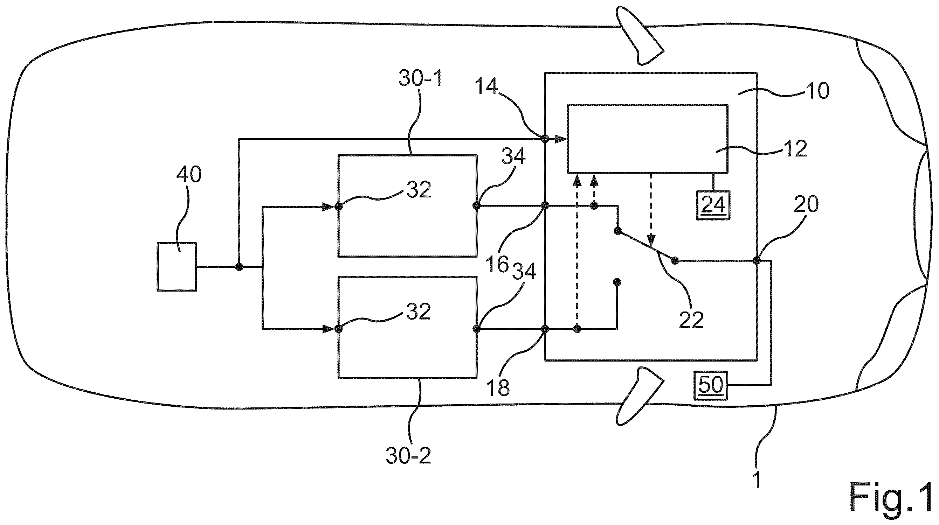

- Fig. 1: eine Prinzipdarstellung der Grundkomponenten einer Vorrichtung der erfindungsgemäßen Art in einem Kraftfahrzeug der erfindungsgemäßen Art zur Durchführung des Verfahrens der erfindungsgemäßen Art.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In der Figur bezeichnen gleiche Bezugszeichen jeweils funktionsgleiche Elemente.

In einem im Ganzen mit 1 bezeichneten Kraftfahrzeug sollen ausgehend von Messwerten von Sensoren, hier mit 40 bezeichnet, letztlich Steuerbefehle an Aktoren 50 gehen. Hierzu gibt es in dem Kraftfahrzeug 1 eine neuartige Vorrichtung 10. Die eigentlichen Steuerbefehle werden von einem ersten Steuergerät 30-1 und einem zweiten Steuergerät 30-2 erzeugt, wobei diese Steuergeräte 30-1, 30-2 über jeweilige Eingänge 32 Eingangssignale von den Sensoren 40 empfangen und über jeweilige Ausgänge 34 Steuerbefehle ausgeben. Die Steuergeräte 30-1 und 30-2 unterscheiden sich in der Steuergerätevariante. Im Falle des Steuergeräts 30-1 kann es sich um ein Steuergerät handeln, das sich bereits in der Praxis bewährt hat, allerdings durch aktuelle Entwicklungen von Hardware und/oder Software überholt ist. Bei dem Steuergerät 30-2 handelt es sich um eine neuere Steuergerätevariante. Die Vorrichtung 10, hier auch als Wächtersteuergerät bezeichenbar, hat vorliegend die Eigenschaft, dass sie über Dateneingänge verfügt, nämlich über einen mit dem Ausgang 34 des ersten Steuergeräts 30-1 gekoppelten Dateneingang 16, einen mit dem Ausgang 34 des zweiten Steuergeräts 30-2 gekoppelten Dateneingang 18 und über einen dritten Dateneingang 14 für die diejenigen Signale, die den Steuergeräten 30-1, 30-2 ihrerseits als Eingangssignal zugeführt werden, nämlich die Signale von den Sensoren 40. In der Vorrichtung 10 gibt es eine Datenverarbeitungseinrichtung 12 mit Überwachungsfunktion. Diese legt fest, ob die ersten Steuerbefehle, die über den Dateneingang 16 eingehen, oder ob die zweiten Steuerbefehle, die über den Dateneingang 18 eingehen, letztlich an einen Datenausgang 20 gegeben werden, der mit den Aktoren 50 gekoppelt ist. Die Vorrichtung 10 verfügt vorliegend über eine Schalteinrichtung 22, die ein entsprechendes Umschalten vornehmen kann. Dies ist nach Art eines Relais-Schalters dargestellt, die Schaltfunktionalität kann jedoch auch, anders als dargestellt, Teil der Datenverarbeitungseinrichtung 12 sein.

Allgemein ist die Erfindung anwendbar auf Nutzung von sowohl analogen als auch digitalen Signalen, dies in jedweder Kombination bezüglich der Eingangssignale und/oder der Ausgangssignale aller Geräte. So könnten beispielsweise die von den Sensoren 40 kommenden Signale Analogsignale sein, die dann aber in den Steuergeräten 30-1, 30-2 zu digitalen Signalen gewandelt werden, so dass die Vorrichtung 10 über den Eingang 14 Analogsignale und über die Dateneingänge 16 und 18 digitale Signale empfängt. Weitere Varianten sind möglich.

Die hier gezeigten Leitungen können auch Kombinationen von mehr als einer physikalischen Leitung umfassen.

Die Vorrichtung plausibilisiert die über die drei Dateneingänge empfangenen Daten und übernimmt eine Überwachungsfunktion, die wiederum über Konfigurationssoftware konfiguriert, parametriert bzw. programmiert werden kann. So kann ein Entwickler von Steuergeräten entscheiden, welche Funktionen der neuen Steuergerätevariante 30-2 ohne Überwachung auf den Datenausgang 20 gelegt werden soll, welche durch die Funktion der alten Steuergerätevariante 30-1 ersetzt werden soll, welche Funktion mit der Funktion der alten Steuergerätevariante 30-1 abgeglichen werden soll (Vergleich der Eingänge 16, 18), welche Funktion durch einen unabhängig programmierten Test plausibilisiert werden soll, oder ob durch eine Mischform der beiden zuletzt genannten Vorgehen plausibilisiert werden soll (Vergleich der Steuerbefehle, die über die Dateneingänge 16, 18 eingehen und zusätzlich unabhängig programmierter Test).

Des Weiteren können in der Datenverarbeitungseinrichtung 12 Reaktionen auf Fehlerfälle vordefiniert werden. So kann beispielsweise bei falschem Verhalten (gemäß vorbestimmtem Kriterium) der neuen Steuergerätevariante 30-2 der Ausgang durch die Ereignisse der alten Steuergerätevariante überschrieben werden, eine Warnung an den Entwickler ausgegeben werden und ein sicherer Zustand eingenommen werden, insbesondere das Kraftfahrzeug zum Halt gebracht werden oder dergleichen ähnliches.

Die empfangenen und erzeugten Daten können in einem Speicher 24 der Vorrichtung abgelegt werden, und auch interne Größen, die zur Plausibilisierung herangezogen werden, können zur späteren Analyse geloggt werden. Alternativ (nicht in der Figur dargestellt) können die Input- und Outputdaten live an einen Entwicklungsrechner außerhalb des Kraftfahrzeugs übermittelt werden.

Im vorliegenden Fall kann es sich bei dem Kraftfahrzeug um einen Prototypen handeln, der von einem Testfahrer gefahren wird. Mit fortschreitender Technik kann aber auch vorgesehen sein, dass ein normales Straßenfahrzeug mit den beiden Steuergeräten 30-1 und 30-2 sowie der Vorrichtung 10 ausgestattet wird, damit neuere Entwicklungen zur Verfügung stehen, ohne dass eine Gefahrensituation hervorgerufen wird.

Die Vorrichtung 10 kann generisch umgesetzt sein, um eine weitreichende Funktionalität zu gewährleisten. So kann hardwareseitig die Vorrichtung 10 als Wächtersteuergerät mit konfigurierbaren In- und Outputs ausgestattet sein, dies auch möglich unter Nutzung von sowohl Analog- als auch Digitalsignalen. So kann die Beschaltung üblicher Steuergeräte nachgebildet werden. Für die Konfiguration dieser Beschaltungen der Vorrichtung 10 sollte dann eine Konfigurationssoftware bereitgestellt werden.

Insgesamt zeigen die Beispiele, wie eine Überwachungshardware für Entwicklung und Test von Steuergeräte-Hardware und -Software bereitgestellt werden kann.

## Patentansprüche

1. Vorrichtung (10) zum Bereitstellen von Steuerbefehlen für zumindest eine zu steuernde Einrichtung (50) eines Kraftfahrzeugs (1), insbesondere für zumindest einen Aktoren (50) des Kraftfahrzeugs (1), mit:
- einem ersten Dateneingang (16) für erste Steuerbefehle vorbestimmter Art von einem ersten Steuergerät (30-1) gemäß einer früheren Steuergerätevariante;
- einem zweiten Dateneingang (18) für zweite Steuerbefehle der vorbestimmten Art von einem zweiten Steuergerät (30-2) gemäß einer neueren Steuergerätevariante;
- einem Datenausgang (20) zur Ausgabe der Steuerbefehle für die zumindest eine zu steuernde Einrichtung (50);
- einer Datenverarbeitungseinrichtung (12), die ausgelegt ist, anhand einer Analyse zumindest der zweiten Steuerbefehle festzulegen, ob die ersten oder die zweiten Steuerbefehle an die zumindest eine zu steuernde Einrichtung (50) weitergeleitet werden, und eine entsprechende Ausgabe über den Datenausgang (20) zu bewirken.

2. Vorrichtung (10) nach Anspruch 1, mit einer Schalteinrichtung (22) zum Empfangen der ersten und der zweiten Steuerbefehle und zum wahlweisen Weiterleiten der ersten oder zweiten Steuerbefehle an den Datenausgang (20), wobei die Schalteinrichtung Teil der Datenverarbeitungseinrichtung ist oder von dieser ansteuerbar ist.

3. Vorrichtung (10) nach Anspruch 1 oder 2, mit einem dritten Dateneingang (14), über den Eingangssignale zuführbar sind, die auch dem ersten und zweiten Steuergerät (30-1, 30-2) zuführbar sind und so in die über den ersten und den zweiten Dateneingang (16, 18) eingehenden ersten und zweiten Steuerbefehle eingegangen sind oder sein könnten, wobei die Datenverarbeitungseinrichtung (12) ausgelegt ist, bei der Analyse auch diese über den dritten Dateneingang (14) zugeführten Eingangssignale zu berücksichtigen.

4. Vorrichtung (10) nach einem der Ansprüche 1 bis 3, bei der die Datenverarbeitungseinrichtung (12) ausgelegt ist, bei der Analyse auch die ersten Steuerbefehle zu berücksichtigen.

5. Vorrichtung nach einem der Ansprüche 1 bis 4, die mehrere Funktionalitäten für die zumindest eine zu steuernde Einrichtung unterstützt, wobei die Datenverarbeitungseinrichtung (12) ausgelegt ist, paarweise erste und zweite Steuerbefehle einer der Funktionalitäten zuzuordnen, und wobei die Analyse und die entsprechende Entscheidung darüber, welche aus den ersten und den zweiten Steuerbefehlen weitergeleitet werden, von der zugeordneten Funktionalität abhängig erfolgen.

6. Vorrichtung (10) nach einem der Ansprüche 1 bis 5, mit einem Speicher (24) zum Ablegen zumindest eines Teils der empfangenen Daten und vorzugsweise zum Ablegen von zugehörigen Daten betreffend die Festlegung, welche aus den ersten und den zweiten Steuerbefehlen weitergeleitet werden.

7. Vorrichtung (10) nach einem der Ansprüche 1 bis 6, bei der die Datenverarbeitungseinrichtung (12) ein lernendes System umfasst, das ausgelegt ist, anhand der über den Datenausgang (20) ausgegebenen Steuerbefehle und von daraufhin über die Dateneingänge (14, 16, 18) eintreffende Daten die bisherige Art der Analyse zu ändern.

8. Kraftfahrzeug (1) mit der Vorrichtung (10) nach einem der Ansprüche 1 bis 7 und mit der zumindest einen zu steuernden Einrichtung (50), deren Eingang mit dem Datenausgang (20) der Vorrichtung (10) gekoppelt ist, und mit einem ersten Steuergerät (30-1) gemäß einer früheren Steuergerätevariante, dessen Ausgang (34) mit dem ersten Dateneingang (16) der Vorrichtung (10) gekoppelt ist, und einem zweiten Steuergerät (30-2) gemäß einer neueren Steuergerätevariante, dessen Ausgang (34) mit dem zweiten Dateneingang (18) der Vorrichtung gekoppelt ist.

9. Kraftfahrzeug (1) nach Anspruch 8, mit der Vorrichtung (10) nach Anspruch 3 und mit Messeinrichtungen (40), deren Ausgänge mit Eingängen (32) des ersten und des zweiten Steuergeräts (30-1, 30-2), und mit dem dritten Dateneingang (14) der Vorrichtung (10) gekoppelt sind.

10. Kraftfahrzeug nach Anspruch 8 oder 9, mit einem Kofferraum, in dem die Vorrichtung und das zweite Steuergerät (30-2) angeordnet sind.

11. Verfahren zum Ansteuern von zumindest einer Einrichtung (50) eines Kraftfahrzeugs (1), insbesondere eines Aktoren (50) des Kraftfahrzeugs (1), mit dem Schritten:
- Zuführen von Eingangsdaten zu einem ersten Steuergerät (30-1) gemäß einer früheren Steuergerätevariante, das erste Steuerbefehle abgibt, und zu einem zweiten Steuergerät (30-2) gemäß einer neueren Steuergerätevariante, das zweite Steuerbefehle abgibt;
- Empfangen zumindest der zweiten Steuerbefehle und unter Nutzung der zweiten Steuerbefehle Festlegen, ob die ersten und die zweiten Steuerbefehle an die Einrichtung (50) übermittelt werden, und entsprechendes Ausgeben der Steuerbefehle gemäß der Festlegung an die Einrichtung (50).

12. Verfahren nach Anspruch 11, bei dem das Festlegen zugleich unter Nutzung der Eingangsdaten und/oder der ersten Steuerbefehle erfolgt.

13. Verfahren nach Anspruch 11 oder 12, bei dem das Festlegen in zeitlicher Taktung und/oder ereignisgesteuert immer wieder neu erfolgt.

14. Verfahren nach einem der Ansprüche 11 bis 13, bei dem das erste und das zweite Steuergerät (30-1, 30-2) ausgelegt sind, die gleiche Steuergeräteaufgabe zu erfüllen und bei dem sich das erste und das zweite Steuergerät durch Hardware und/oder auf der Hardware laufende Software voneinander unterscheiden.

15. Verfahren nach einem der Ansprüche 11 bis 14, bei dem im Rahmen des Festlegens eine Analyse erfolgt, die auch erfasst, ob die zweiten Steuerbefehle geeignet wären, eine Gefahrensituation und/oder eine wirtschaftlich unerwünschte Situation herbeizuführen, wobei in einem solchen Fall eine Warnung ausgegeben wird und/oder ein sicherer Zustand des Kraftfahrzeugs (1) hervorgerufen wird.

16. Verfahren zum Durchführen eines fahrdynamischen Tests in einem Kraftfahrzeug, mit den Schritten:
- Bereitstellen des Kraftfahrzeugs nach einem der Ansprüche 8 bis 10, welches die Vorrichtung nach Anspruch 2 umfasst, und mit:
- Nutzen der Schalteinrichtung (22), um die ersten Steuerbefehle des ersten Steuergeräts (30-1) für eine erste Testaktion an die zu steuernde Einrichtung (50) weiterzuleiten und die zweiten Steuerbefehle des zweiten Steuergeräts (30-2) für eine zweite Testaktion an die zu steuernde Einrichtung weiterzuleiten, wobei die erste und die zweite Testaktion beinhalten, dass das Kraftfahrzeug auf gleicher oder vergleichbarer Teststrecke mit einer vergleichbaren Fahrweise gefahren wird.
